# EUROPÄISCHE PATENTSCHRIFT

(11) **EP 3 577 873 B1**
(45) Veröffentlichungstag und Bekanntmachung des Hinweises auf die Patenterteilung: **07.06.2023**
(21) Anmeldenummer: 17835832.1
(22) Anmeldetag: 19.12.2017
(51) Int. Cl.: H04W 12/04, H04W 4/00, H04W 12/041, H04L 9/40, H04W 12/0433, H04W 12/40

(54) **SICHERHEITSEINHEIT INSBESONDERE EIN FÜR IOT-GERÄT UND VERFAHREN ZUR AUSFÜHRUNG EINER ODER MEHRERER APPLIKATIONEN ZUM GESICHERTEN DATENAUSTAUSCH MIT EINEM ODER MEHRERE WEB-DIENSTE BEREITSTELLENDEN SERVERN**
SAFETY UNIT, IN PARTICULAR FOR AN IOT DEVICE AND METHOD FOR EXECUTING ONE OR MORE APPLICATIONS FOR SECURE DATA EXCHANGE WITH ONE OR MORE SERVERS PROVIDING WEB SERVICES
UNITÉ DE SÉCURITÉ EN PARTICULIER POUR UN APPAREIL IOT ET PROCÉDÉ D'EXÉCUTION D'UNE OU PLUSIEURS APPLICATIONS D'ÉCHANGE DE DONNÉES SÉCURISÉ AVEC UN OU PLUSIEURS SERVEURS DE FOURNISSEUR DE SERVICE WEB

(30) Priorität: 07.03.2017 EP 17159631
(43) Veröffentlichungstag der Anmeldung: 11.12.2019
(73) Patentinhaber: Siemens Aktiengesellschaft, 80333 München (DE)
(72) Erfinder: FALK, Rainer, 85586 Poing (DE)
(74) Vertreter: Siemens Patent Attorneys
(86) Internationale Anmeldenummer: PCT/EP2017/083453
(87) Internationale Veröffentlichungsnummer: WO 2018/162109

(56) Entgegenhaltungen:
- US-B2- 6 735 627
- US-B2- 6 735 627
- AKI-PETTERI LEINONEN ET AL: "Implementing Open Authentication for Web Services with a Secure Memory Card", NEAR FIELD COMMUNICATION (NFC), 2012 4TH INTERNATIONAL WORKSHOP ON, IEEE, 13. März 2012 (2012-03-13), Seiten 31-35, XP032155322, DOI: 10.1109/NFC.2012.15 ISBN: 978-1-4673-1209-7
- Anonymous: "Tokenization (data security) - Wikipedia", , 24. Februar 2017 (2017-02-24), XP055369766, Gefunden im Internet: URL:https://en.wikipedia.org/w/index.php?t itle=Tokenization_(data_security)&oldid=76 7180347 [gefunden am 2017-05-05] in der Anmeldung erwähnt
- "Information Supplement: PCI DSS Tokenization Guidelines Standard: PCI Data Security Standard (PCI DSS)", , 1. August 2011 (2011-08-01), XP055219868, Gefunden im Internet: URL:https://www.pcisecuritystandards.org/d ocuments/Tokenization_Guidelines_Info_Supp lement.pdf [gefunden am 2015-10-09] in der Anmeldung erwähnt
- Anonymous: "JSON Web Token - Wikipedia", , 7. Februar 2017 (2017-02-07), XP055369783, Gefunden im Internet: URL:https://en.wikipedia.org/w/index.php?t itle=JSON_Web_Token&oldid=764241972 [gefunden am 2017-05-05] in der Anmeldung erwähnt

## Beschreibung

Die vorliegende Erfindung betrifft ein Sicherheitseinheit insbesondere für ein IoT-Gerät und Verfahren zur Ausführung einer oder mehrerer Applikationen zum gesicherten Datenaustausch mit einem oder mehrere Web-dienste bereitstellenden Servern sowie ein zugehöriges Computerprogramm(-produkt).

### Hintergrund der Erfindung

Ein Trust Anchor (Vertrauensanker) wird für Computersysteme, unter anderem auch für eingebettete Systeme und IoT- Devices verwendet, um Security-Funktionen vertrauenswürdig und angriffsresistent zu realisieren. Ein herkömmlicher Trust Anchor (z.B. Crypto Controller, Secure Element) dient im Wesentlichen nur der Speicherung von kryptographischen Schlüsseln und der Ausführung von elementaren kryptographischen Operationen (z.B. Verschlüsselung, Entschlüsselung unter Verwendung des lokal gespeicherten Schlüssels). Der Trust Anchor wird von einem Applikationsprozessor angesprochen, der eine Software bzw. Applikation ausführt. Der Applikationsprozessor kann jedoch auch manipulierte Software ausführen (z.B. wenn Schwachstellen von einem Angreifer ausgenutzt werden) und dann damit die von einem Trust Anchor bereitgestellten kryptographischen Dienste nutzen. Daher besteht ein Bedarf, sensible Applikationslogik zur Nutzung von kryptographischen Basisoperationen zu schützen. Es besteht zudem ein Bedarf für einen besseren Schutz der Behandlung von JSON Web Tokens (JWT), die bei Internet-basierten Web-Diensten und IoT-Diensten intensiv genutzt werden.

Als ein eingebettetes System (auch englisch "embedded system" genannt) bezeichnet man einen elektronischen Rechner oder auch Computer, der in einen technischen Kontext eingebunden (eingebettet) ist. Dabei übernimmt der Rechner in der Regel entweder Überwachungs-, Steuerungs- oder Regelfunktionen oder ist für eine Form der Daten- bzw. Signalverarbeitung zuständig, beispielsweise beim Ver- bzw. Entschlüsseln, Codieren bzw. Decodieren oder Filtern. In die Kategorie "embedded system" kann auch ein Feldgerät, kurz FG, engl. Field Device (FD), einsortiert werden.

Der Begriff Internet der Dinge (IdD) (auch: "Allesnetz"; englisch Internet of Things, Kurzform: IoT) beschreibt, dass der (Personal-) Computer in der digitalen Welt zunehmend von "intelligenten Gegenständen" bis hin zu "KI", künstlicher Intelligenz ergänzt wird. Das "Internet der Dinge", oft realisiert mit immer kleineren eingebetteten Systemen, soll den Anwender bei seinen Tätigkeiten unmerklich unterstützen, ohne abzulenken oder überhaupt aufzufallen.

Der Einsatz von Crypto Controllern oder Hardware Secure Elements (Chipkartenprozessor, Trusted Platform Module, Security Module) ist möglich. Dabei handelt es sich um speziell geschützte Mikroprozessoren. Es gibt weiterhin allgemeine Mikrocontroller / Applikationsprozessoren mit integriertem Schlüsselspeicher (Fuses) und Hardware Crypto Engine (performance, Stromverbrauch).

Aus der Patentschrift US6735627 ist ein System und eine Methode für sogenannte Smart Cards bekannt, die die Übertragung von Multimedia Daten über ein IP-basiertes Netzwerk ermöglichen. Dabei wird das TLS-Kommunikationsprotokoll auf einem Secure Element (Smart Card Chip) realisiert. Bei Kreditkarten sind spezielle Dienste bzw. Anwendungen zum Ersetzen der Kreditkartennummer durch ein Pseudonym bekannt, sodass im kaufmännischen Abrechnungssystem nicht die tatsächlichen Kreditkartennummern vorliegen.

Dies wird als Tokenization bezeichnet. Siehe z.B. https://en.wikipedia.org/wiki/Tokenization (data security) und https://www.pcisecuritystandards.org/documents/Tokenization G uidelines Info Supplement.pdf.

Viele Web-Dienste werden auf Basis von OAUTH (Authentisierungsprotokoll, siehe https://en.wikipedia.org/wiki/OAuth , https://tools.ietf.org/html/rfc6749) geschützt (d.h. unter Verwendung von JSON Web Token). Die Token werden heute auf Client-Plattform durch die Applikation gespeichert.

Einen Überblick über JSON Web Tokens (JWT) gibt z.B. https://en.wikipedia.org/wiki/JSON Web Token. JWT sind im Internet-Standard RFC 7519 standardisiert (https://tools.ietf.org/html/rfc7519) .

Es ist bekannt, dass ein Client sein JWT selbst generiert, siehe z.B. http://blog.keycloak.org/2015/10/authentication-of-dients-with-signed.html.

Die Sicherheit innerhalb solch einer Infrastruktur sowie das Verhindern von absichtlichen Angriffen spielt eine zunehmend wichtigere Rolle. Bei einer erfolgreichen Manipulation kann es zu einer Fehlfunktion in Steuerungsfunktionen der oben genannten Geräte kommen.

Durch kryptographische Schutzfunktionen können Ziele wie Integrität, Vertraulichkeit oder Authentizität der Gegenstände erreicht werden. Dadurch werden absichtliche, zielgerichtete Angriffe abgewehrt.

Der Begriff "Sicherheit" bezieht sich im Wesentlichen auf die Sicherheit, Vertraulichkeit und/oder Integrität von Daten sowie deren Übertragung und auch Sicherheit, Vertraulichkeit und/oder Integrität beim Zugriff auf entsprechende Daten. Auch die Authentifizierung bei Datenübertragungen beziehungsweise beim Datenzugriff gehört unter anderem zum Begriff "Sicherheit. Unter einer kryptografischen Funktionalität wird allgemein beispielsweise eine Funktion zur Verschlüsselung, zum Schutz der Vertraulichkeit, zum Integritätsschutz und/oder zur Authentifikation von Daten (z.B. Nutzerdaten, Steuerdaten, Konfigurationsdaten oder administrative Daten) verstanden. Die kryptografische Schutzfunktionalität kann dabei beispielsweise eine oder mehrere der nachfolgend aufgeführten Funktionalitäten umfassen:
- Schlüsselspeicherung
- System- und/oder Nutzer-Authentisierung
- Attestierung
- Verschlüsselung
- Entschlüsselung
- Berechnen einer kryptografischen Prüfsumme (z.B. Signatur)
- Prüfen einer kryptografischen Prüfsumme (z.B. Signatur)
- Schlüsselvereinbarung
- Schlüsselerzeugung
- Erzeugen von Zufallszahlen (z.B. Seed-Generierung)
- Lizenzierung
- Unterstützung von systemischen Überwachungsfunktionen (z.B. Tamper-Schutz, Systemintegrität, Security Incident and Event Management SIEM)
- Überwachen oder Überwachung von Daten
- Validierung von Daten
- Filterung von Daten

Die aufgezählten kryptografischen Funktionalitäten können dabei jeweils wieder mit anderen/weiteren Verfahren oder Kombinationen dieser Verfahren ausgeführt sein.

Weiterhin ist es möglich, dass ein Nutzer als Teil einer HTTP-Anfrage ein Autorisierungstoken als Datenstruktur (s.o. JWT, JSON Web Token) vom Nutzer (Web-Browser) an den Web-Server überträgt. Das JWT-Autorisierungstoken wird normalerweise von einem "Single Sign On"-Dienst ausgestellt. Weiterhin ist es möglich, dass das HTTP-Protokoll (HTTP, CoAP) über eine kryptographisch geschützte Kommunikationsverbindung (TLS, DTLS) übertragen wird. Dabei wird meist nur der Server mittels eines digitalen Zertifikats authentisiert. Es ist jedoch auch möglich, dass auch der Client sich mit seinem Client-Zertifikat authentisiert.

Die Veröffentlichung "Implementing Open Authentication for Web Services with a Secure Memory Card" (Leinonen et al.) schlägt eine Verwendung von sicheren Speicherkarten mit NFCfähigem Dienst vor, und stellt den Prototypen einer Softwareanwendung vor, um zu zeigen, wie eine sichere Speicherkarte ein tragbares Authentifizierungsmodul für den Zugriff auf Webdienste bereitstellen kann.

Es ist Aufgabe der Erfindung, die Sicherheits- bzw. Schutzmaßnahmen für Geräte, die zur Ausführung einer oder mehrere Applikationen zum Datenaustausch mit einem oder mehrere Webdienste bereitstellenden Servern ausgebildet sind, zu verbessern.

### Darstellung der Erfindung

Diese Aufgabe wird durch die unabhängigen Patentansprüche gelöst. Vorteilhafte Weiterbildungen sind Gegenstand der abhängigen Ansprüche.

Die Erfindung beansprucht eine Sicherheitseinheit geeignet für ein Gerät, insbesondere einem IOT-Gerät, zur Ausführung einer oder mehrerer Applikationen zum gesicherten Datenaustausch mit einem oder mehrere Web-Dienste bereitstellenden Servern, wobei die Sicherheitseinheit ausgebildet ist mit:
- Mitteln zum Abbilden von Originaldaten auf korrespondierende Ersatzdaten und/oder umgekehrt, wobei die Originaldaten einen Originalschlüssel bilden oder zu dessen Bildung verwendbar sind und/oder die Ersatzdaten einen Ersatzschlüssel bilden oder zu dessen Bildung verwendbar sind,
- Mitteln zum Erkennen eines von einer in Ausführung gebrachten Applikation gelieferten, mit einem Originalschlüssel korrespondierenden Ersatzschlüssels und
- Mitteln zum Bereitstellen eines zum Ersatzschlüssel korrespondierenden, angeforderten Originalschlüssels mit Hilfe der genannten Mittel zum Abbilden, um den Originalschlüssel für den gesicherten Datenaustausch zum Server verwenden zu können.

Das Abbilden von Originaldaten auf Ersatzdaten bzw. von Ersatzdaten auf Originaldaten (Rückabbildung) kann durch eine Zuordnungstabelle umgesetzt bzw. durchgeführt werden.

Um den Datenaustausch möglich zu machen, kann der Originalschlüssel nicht nur bei einem Verbindungsaufbau, sondern evtl. allgemein beim Übertragen einer Anfragenachricht zu einem Server verwendet werden. Die Anfragenachricht kann z.B. eine Verbindungsaufbau-Anfragenachricht, eine Anfragenachricht zum Datenaustausch (z.B. MQTT, XMPP) oder eine Web-Dienst-Anfragenachricht sein (HTTP, CoAP).

Eine Weiterbildung der Erfindung sieht zum transparenten Weiterleiten des Originalschlüssels auf der zum gesicherten Datenaustausch verwendbaren Kommunikationsprotokollebene vor.

Eine Weiterbildung der Erfindung sieht vor, dass in der Kommunikationsprotokollebene die Transportschichtsicherheit-Verschlüsselung, abgekürzt TLS oder DTLS, verwendet wird.

Eine Weiterbildung der Erfindung sieht vor, dass ein als Ersatzschlüssel gesetzter Platzhalter im Kommunikationsprotokoll zum gesicherten Datenaustausch durch den bereitgestellten Originalschlüssel ersetzbar ist.

Eine Nutzung eines Trust Anchors / Secure Elements bzw. der Sicherheitseinheit durch Anwendungsprogrammierer wird dadurch vereinfacht, dass im Internet übliche Technologien (JSON Web Token) verwendet werden. Eine fehleranfällige und ggf. manipulierbare direkte Nutzung kryptographischer Operationen ist nicht erforderlich. JSON Web Token als Sicherheits-kritische Daten müssen dabei nicht im normalen Applikationscode verwendet werden. Dadurch wird das Ausnutzen von Schwachstellen im Applikationscode erschwert.

Ein weiterer Aspekt der Erfindung ist ein IoT-Gerät umfassend eine Sicherheitseinheit der oben genannten Art, wobei das I-oT-Gerät
- ein oder mehrere Applikationen ausgebildet zum Datenaustausch mit einem oder mehrere Web-Dienste bereitstellenden Servern und
- zumindest eine Ausführungseinheit aufweist, welche zum Ausführen der einen oder mehreren Applikationen ausgebildet ist.

Eine Weiterbildung des Geräts sieht vor, dass die eine oder mehrere Applikationen zu ihrer Ausführung einen solchen Ersatzschlüssel verwenden kann.

Eine Weiterbildung des Geräts sieht vor, dass der Ersatzschlüssel durch den angeforderten und von der Sicherheitseinheit bereitgestellten Originalschlüssel mittels der Ausführungseinheit ersetzt wird.

Eine Weiterbildung des Geräts sieht vor, dass der Ersatzschlüssel durch den angeforderten und von der Sicherheitseinheit bereitgestellten Originalschlüssel mittels der Sicherheitseinheit ersetzt wird.

Ein weiterer Aspekt der Erfindung ist ein Verfahren zur Ausführung einer oder mehrere Applikationen zum gesicherten Datenaustausch zwischen einem Gerät, insbesondere einem IoT-Gerät, und einem oder mehreren Web-Dienste bereitstellenden Servern, wobei folgende Schritte ausgeführt werden:
- Übertragen einer Nachricht zum Datenaustausch durch eine in Ausführung gebrachte Applikation, wobei die Nachricht durch Abbildung von Originaldaten, welche einen Originalschlüssel bilden oder zu dessen Bildung verwendet werden, auf korrespondierende Ersatzdaten, welche einen Originalschlüssel bilden und/oder zu dessen Bildung verwendet werden, modifiziert wird,
- Erkennen des von der in Ausführung gebrachten Applikation gelieferten, mit dem Originalschlüssel korrespondierenden Ersatzschlüssels und
- Bereitstellen eines zum Ersatzschlüssel korrespondierenden, angeforderten Originalschlüssels mit Hilfe einer Rückabbildung der genannten Abbildung, um den Originalschlüssel für den durch die genannte Nachricht eingeleiteten, gesicherten Datenaustausch zum Server zu verwenden.

In die genannte Nachricht kann ein Authentifizierungs-Kode und/oder eine -prüfsumme eingefügt sein.

Die vorstehend genannten Funktionen/Schritte können in Software, Firmware und/oder Hardware implementiert sein. Sie können als eine Art Funktionseinheiten verstanden werden, die auch in Ihrer Funktion in beliebiger Kombination in eine einzige Einheit (Komponente bzw. Server bzw. Gerät) integriert sein können.

Ein weiterer Aspekt der Erfindung kann ein Computerprogramm bzw. ein Computerprogrammprodukt mit mindestens einem Computerprogramm mit Mitteln zur Durchführung des Verfahrens und dessen genannte Ausgestaltungen sein, wenn das Computerprogramm(-produkt) bzw. das mindestens eine Computerprogramm im IoT-Gerät nach oben beschriebener Art zur Ausführung gebracht wird.

Obige Geräte und Verfahren und gegebenenfalls das Computerprogramm(produkt) können im Wesentlichen analog wie die Sicherheitseinheit und deren Ausgestaltungen bzw. Weiterbildungen entsprechend aus- bzw. weitergebildet werden.

Ausführungsbeispiel(e) :
Weitere Vorteile, Einzelheiten und Weiterbildungen der Erfindung ergeben sich aus der nachfolgenden Beschreibung von Ausführungsbeispielen in Verbindung mit den Zeichnungen.

Dabei zeigen:
- die Figur 1: eine mögliche Ausführungsform des eingebetteten Systems,
- die Figur 2: ein Ablaufdiagramm bei der die Rückabbildung des Ersatzschlüssels auf den Originalschlüssels durch die Ausführungseinheit durchgeführt wird und
- die Figur 3: ein Ablaufdiagramm bei der die Rückabbildung des Ersatzschlüssels auf den Originalschlüssels durch die Sicherheitseinheit durchgeführt wird,

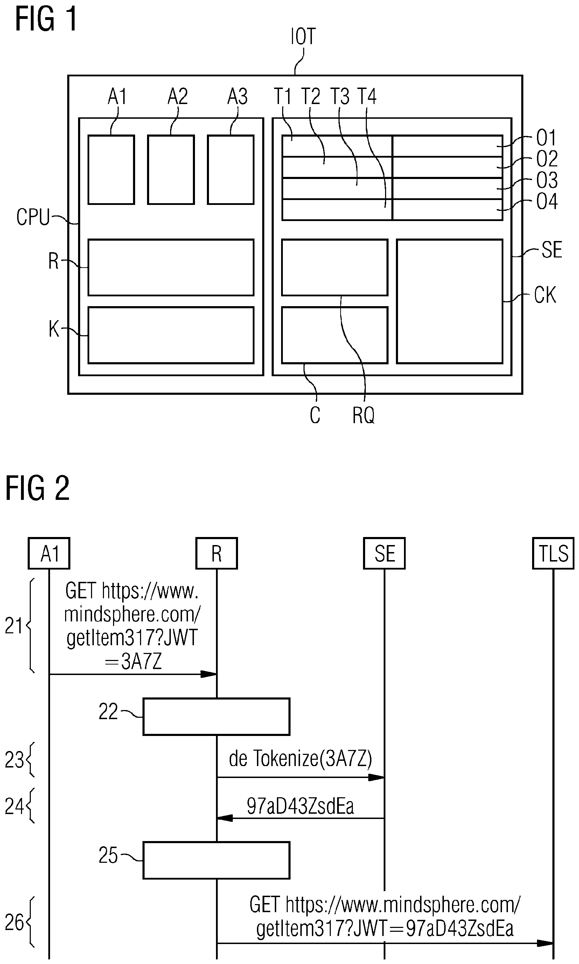

Figur 1 zeigt ein Beispiel für ein eingebettetes System in Form eines IoT-Geräts mit einer Recheneinheit CPU (Applikationsprozessor) mit einem Linux-basierten Betriebssystem, einer Ausführungseinheit in Form einer Applikations- bzw. App-Laufzeitumgebung R und mehreren Apps A1, A2, A3 (Applikationen). Die Recheneinheit CPU führt über die Ausführungseinheit R durch den Linux-Kernel K nacheinander oder parallel die Apps A1, A2, A3 aus. Die Apps kommunizieren (nicht dargestellt) über ein Protokoll, insbesondere HTTP, CoAP, REST, MQTT, XMPP, mit einem Web-Dienste zur Verfügung stellenden Server.

Das IoT-Gerät IOT verfügt über eine Sicherheitseinheit SE für JSON Web Token oder andere Schlüssel, die aus entsprechenden Daten ableitbar sind. Die Sicherheitseinheit SE umfasst hier eine Abbildungs- bzw. Zuordnungstabelle zwischen sogenannten tokenized JWT T1, T2, T3, T4 (Ersatz-JWT bzw. -Schlüssel, die innerhalb des IoT-Gerätes durch die Apps verwendet werden) und den originalen JWT O1, 02, O3, O4 (Originalschlüssel), die gegenüber den externen Web-Services verwendet werden. Die App-Laufzeitumgebung ersetzt hier z.B. einen HTTP/REST-Requestnachricht, die von einer App an die App Runtime übertragen wird, das darin enthaltene "Tokenized JWT" durch das reale JWT. In einer Ausführung wird die HTTP/REST-Requestnachricht RQ dazu an die Sicherheitseinheit SE übertragen und dort, nach Ersetzen des JWT, mittels eines TLS-Protokolls geschützt (verschlüsselt), und die verschlüsselte Nachricht wird zurück an die Ausführungseinheit R übertragen, um diese dann z.B. über eine TCP-Verbindung oder als UDP-Paket über eine Netzwerkschnittstelle zu einem nicht dargestellten Server zu übertragen. Weiterhin verfügt hier die Sicherheitseinheit SE über einen JWT Client Key CK. Damit kann die Sicherheitseinheit SE mit Hilfe eine Generierungseinheit C beispielsweise ein Client-signiertes JWT Token in einer geschützten Ausführungseinheit - bzw. App-Laufzeitumgebung generieren. Weiterhin kann die Sicherheitseinheit eine geschützte JWT-Requestnachricht RQ generieren, mit der von einem Web-Dienst, bereitgestellt von dem Server, insbesondere von einem sogenannten IAM-Web-Dienst unter Nutzung eines Refresh-JWT-Tokens ein Session-JWT-Token (Access Token) geschützt angefordert werden kann.

Die Sicherheitseinheit kann in Hardware, als Firmware, oder als durch einen Hypervisor separierten Software-Prozess realisiert sein. Die Sicherheitseinheit kann insbesondere auf einem Client-System, insbesondere auf einem IoT-Gerät oder auf einem anderen eingebetteten Gerät bzw. Mobilgerät realisiert sein. Sie kann jedoch grundsätzlich auch auf einem Server, insbesondere einem Cloud-basiertem Web-Dienst-System realisiert sein.

Die Sicherheitseinheit kann über folgende (Teil-) Funktionalitäten bzw. Mittel vollständig oder teilweise aufweisen bzw. bereitstellen:
- Lokales Ausstellen eines Client JWT (client signed JWT unter Verwendung eines lokal gespeicherten kryptographischen Schlüssels)
- Ausstellen einer geschützten Anforderungsnachricht zum Anfordern eines neuen Access-Tokens mittels eines auf der Sicherheitseinheit SE hinterlegten Refresh Tokens
- Bereitstellen eines Ersatz-JWT (eingangs erwähnte Tokenization des JSON Web Tokens). In einer Applikation kann das Ersatz-JWT anstatt des originalen (tatsächlichen) JWT-Tokens verwendet werden. Mit anderen Worten ausgedrückt, es gibt eine bijektive Abbildung bzw. Zuordnungstabelle von Originaldaten auf korrespondierende Ersatzdaten, welche jeweils einen Original-JWT (O1, O2, O3, O4) und/oder Ersatz-JWT (T1, T2, T3, T4) bilden und/oder zu deren Bildung verwendet werden.

Dadurch kann eine manipulierte Anwendungssoftware, z.B. ein Web Service Client, den originalen JWT beispielsweise nicht direkt weitergeben. Das von der Applikation verwendete Ersatz-JWT wird durch die Sicherheitseinheit transparent ersetzt (z.B. überträgt die Applikation eine HTTP/REST-Nachricht an die Sicherheitseinheit SE, welche das Ersatz-JWT durch das zugeordnete tatsächliche JWT-Token ersetzt (Rückabbildung) und über eine TLS-geschützte Kommunikationsverbindung überträgt;
- Einfügen eines JWT in einen TLS/DTLS-Datenstrom (in Verschlüsselungspfad Modifikation des Klartexts, um JWT zu ergänzen; Die Applikation z.B. A1 setzt dabei einen Identifier bzw. Platzhalter, das durch das echte Token ersetzt wird). Hier erfolgt also keine echte Tokenization, sondern es wird in ein Formatfeld (z.B: "##JSONWEBTOKEN##") das JWT eingetragen.
- Ausstellen einer Eigentümer-Prüfsumme zur Nutzung eines JWT mit bestimmten Nutzdaten (z.B. Message Authentication Code)

Die Figur 2 zeigt einen möglichen Ablauf, der mit einzelnen Schritten 21 bis 26 gekennzeichnet ist, auf dem IoT-Gerät, bei dem eine Applikation (App) z.B. hier A1 eine RequestNachricht senden möchte. Dazu überträgt in Schritt 21 die Applikation A1 die Nachricht an eine nicht dargestellte Anwendungsprogrammierschnittstelle, abgekürzt API, der Ausführungseinheit R. Die Nachricht enthält einen Ersatzschlüssel in Form eines tokenisierten JWT. Basierend auf der Nachricht wird eine Anfrage an die Sicherheitseinheit SE gestellt, um das tokenisierte JWT durch das originale bzw. reale, extern gültige JWT zu ersetzen. Die Ausführungseinheit R prüft in Schritt 22, ob ein tokenisiertes Ersatz-JWT vorliegt und bildet in den Schritten 23 und 24, 25 (Rückabbildung) eine modifizierte Anfrage-Nachricht, die anstatt des tokenisierten Ersatz-JWT das originale JWT enthält. Diese wird in Schritt 26 an einen TLS-Kommunikationsstapel (Stack) TLS übergeben, um sie an den angegebenen Server zu übertragen.

Dies hat den Vorteil, dass die Applikation (App), hier z.B. A1 das eigentliche JWT, das extern gültig ist, nicht kennt. Daher kann selbst eine manipulierte Applikation das JWT nicht preisgeben.

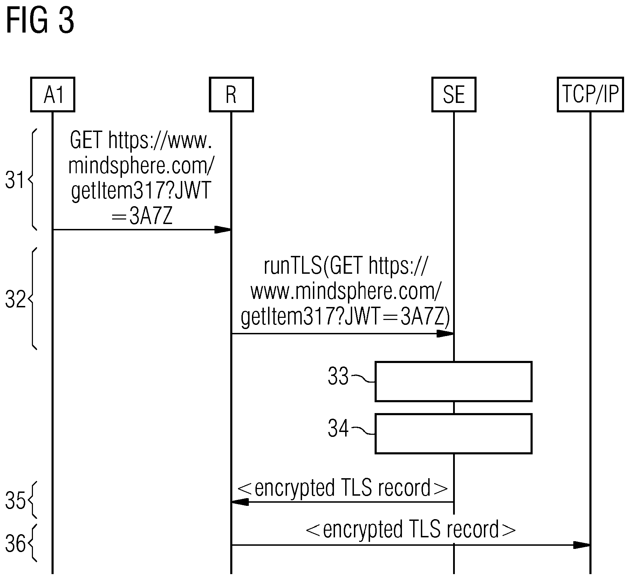

Figur 3 zeigt eine Ausführungsform eines Ablaufs, der mit einzelnen Schritten 31 bis 36 gekennzeichnet ist, bei der auf der Sicherheitseinheit die JWT-Tokenbehandlung erfolgt und das TLS-Protokoll realisiert ist. TLS ist eine Transportschichtsicherheit-Verschlüsselung, die mit TLS für eine darunterliegende TCP-basierten Übertragung oder mit DTLS für eine darunterliegende UDP-basierten Übertragung), abgekürzt wird.

Hierbei wird läuft Schritt 31 wie Schritt 21 ab. In Schritt 32 wird die die oben genannte Nachricht transparent (= getunneltes Weiterleiten bzw. nach außen nicht sichtbar) zur Sicherheitseinheit durchgereicht, wobei die Ausführungseinheit R die Sicherheitseinheit SE beispielsweise mit dem Befehl "runTLS" dazu auffordert, das TLS-Protokoll zur Übertragung der Nachricht zu verwenden. In Schritt 33 wird dann das tokenisierten Ersatz-JWT durch das originale JWT ersetzt und in das TLS-Protokoll eingebunden (Schritt 34) an die Ausführungseinheit übermittelt (Schritt 35). Diese wird in Schritt 36 an einen TCP/IP-Kommunikationsstapel (Stack) TCP/IP übergeben, um sie an den angegebenen Server zu übertragen.

Es ist möglich, dass in den obigen Ausführungsformen ein Platzhalter im Kommunikationsprotokoll (HTTP, CoAP, MQTT, TLS, TCP/IP) mit dem Ersatzschlüssel besetzt wird.

In die oben genannte Nachricht kann ein Authentifizierungscode und/oder eine -prüfsumme eingefügt sein.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. IoT-Gerät (IOT) umfassend ein oder mehrere Applikationen (A1, A2, A3) ausgebildet zum Datenaustausch mit einem oder mehrere Web-Dienste bereitstellenden Servern und umfassend eine Sicherheitseinheit (SE) ausgebildetmit:
- Mitteln (R, SE) zum Abbilden von Originaldaten auf korrespondierende Ersatzdaten und umgekehrt, wobei die Originaldaten einen Originalschlüssel (O1, O2, O3, O4) bilden und die Ersatzdaten einen Ersatzschlüssel (T1, T2, T3, T4) bilden,
- Mitteln zum Erkennen eines von einer in Ausführung gebrachten Applikation (A1) gelieferten, mit einem Originalschlüssel korrespondierenden Ersatzschlüssels und
- Mitteln (SE, R) zum Bereitstellen eines zum Ersatzschlüssel korrespondierenden, angeforderten Originalschlüssels mit Hilfe der genannten Mittel zum Abbilden, um den Originalschlüssel für den gesicherten Datenaustausch zum Server zu verwenden,
und umfassend zumindest eine Ausführungseinheit (R) welche zum Ausführen der einen oder mehreren Applikationen ausgebildet ist, wobei
- die eine oder mehrere Applikationen zu ihrer Ausführung einen solchen Ersatzschlüsseln verwendet und
- der Ersatzschlüssel durch den angeforderten und von der Sicherheitseinheit bereitgestellten Originalschlüssel mittels der Sicherheitseinheit ersetzt wird.

2. IOT-Gerät (IOT) nach Anspruch 1, wobei die Sicherheitseinheit Mittel (R) zum transparenten Weiterleiten des Originalschlüssels auf der zum gesicherten Datenaustausch verwendbaren Kommunikationsprotokollebene aufweist.

3. IOT-Gerät (IOT) nach Anspruch 1 oder 2, wobei in der Sicherheitseinheit in der Kommunikationsprotokollebene die Transportschichtsicherheit-Verschlüsselung, abgekürzt TLS oder DTLS, verwendet wird.

4. IOT-Gerät (IOT) nach einem der vorstehenden Ansprüche, wobei in der Sicherheitseinheit ein als Ersatzschlüssel gesetzter Platzhalter im Kommunikationsprotokoll zum gesicherten Datenaustausch durch den bereitgestellten Originalschlüssel ersetzbar ist.

5. IOT-Gerät (IOT) nach einem der vorstehenden Ansprüche, wobei die Sicherheitseinheit folgende Funktionalitäten bereitstellt:
- Lokales Ausstellen eines client signed JWT unter Verwendung eines lokal gespeicherten kryptographischen Schlüssels,
- Ausstellen einer geschützten Anforderungsnachricht zum Anfordern eines neuen Access-Tokens mittels eines auf der Sicherheitseinheit (SE) hinterlegten Refresh Tokens,
- Bereitstellen eines Ersatz-JWT, so dass in einer Applikation das Ersatz-JWT anstatt des originalen JWT-Tokens verwendet werden kann,
so dass es eine bijektive Zuordnungstabelle von Originaldaten auf korrespondierende Ersatzdaten gibt, welche jeweils einen Original-JWT (O1, O2, O3, O4) und/oder Ersatz-JWT (T1, T2, T3, T4) bilden und/oder zu deren Bildung verwendet werden.

6. Verfahren zur Ausführung einer oder mehrere Applikationen (A1, A2, A3) zum gesicherten Datenaustausch zwischen einem IoT-Gerät (IOT), und einem oder mehreren Web-Dienste bereitstellenden Servern, wobei folgende Schritte ausgeführt werden:
- Übertragen (21, 31) einer Nachricht zum Datenaustausch durch eine in Ausführung gebrachte Applikation, wobei die Nachricht durch Abbildung von Originaldaten, welche einen Originalschlüssel (O1, O2, O3, O4) bilden oder zu dessen Bildung verwendet werden, auf korrespondierende Ersatzdaten, welche einen Ersatzschlüssel (T1, T2, T3, T4) bilden und/oder zu dessen Bildung verwendet werden, modifiziert wird,
- Erkennen (22, 33) des von der in Ausführung gebrachten Applikation gelieferten, mit dem Originalschlüssel korrespondierenden Ersatzschlüssels und
- Bereitstellen eines zum Ersatzschlüssel korrespondierenden, angeforderten Originalschlüssels mit Hilfe einer Rückabbildung (25, 33) der genannten Abbildung, um den Originalschlüssel für den durch die genannte Nachricht eingeleiteten, gesicherten Datenaustausch zum Server (26, 36) zu verwenden.

7. Verfahren nach dem vorhergehenden Anspruch, **dadurch gekennzeichnet, dass** in der Kommunikationsprotokollebene die Transportschichtsicherheit-Verschlüsselung, abgekürzt TLS oder DTLS, verwendet wird.

8. Verfahren nach einem der vorhergehenden Verfahrensansprüche, **dadurch gekennzeichnet, dass** ein als Ersatzschlüssel gesetzter Platzhalter im Kommunikationsprotokoll zum gesicherten Datenaustausch durch den bereitgestellten Originalschlüssel ersetzt wird.

9. Verfahren nach einem der vorhergehenden Verfahrensansprüche, **dadurch gekennzeichnet, dass** in die genannte Nachricht ein Authentifizierungs-Kode und/oder eine -prüfsumme eingefügt ist.

10. Computerprogrammprodukt mit mindestens einem Computerprogramm, das Mittel zur Durchführung des Verfahrens nach einem der vorstehenden Verfahrensansprüche aufweist, wenn das mindestens eine Computerprogramm im IoT-Gerät nach einem der vorstehenden Geräteansprüche zur Ausführung gebracht wird.

## Claims

1. IoT device (IOT) comprising one or more applications (A1, A2, A3) designed to interchange data with one or more servers which provide web services and comprising a security unit (SE) designed to have:
- means (R, SE) for mapping original data to corresponding replacement data and vice versa, wherein the original data form an original key (O1, O2, O3, O4) and the replacement data form a replacement key (T1, T2, T3, T4),
- means for detecting a replacement key that is supplied by an application (A1) which is being executed, and that corresponds to an original key, and
- means (SE, R) for providing a requested original key, corresponding to the replacement key, using the aforementioned means for mapping, in order to use the original key for the secured interchange of data with the server,
and comprising at least one execution unit (R) which is designed to execute the one or more applications, wherein
- the one or more applications use such a replacement key for their execution and
- the replacement key is replaced by the requested original key, provided by the security unit, by means of the security unit.

2. IOT device (IOT) according to Claim 1, wherein the security unit has means (R) for transparently forwarding the original key on the communication protocol level which can be used for the secured interchange of data.

3. IOT device (IOT) according to Claim 1 or 2, wherein the transport layer security encryption, abbreviated to TLS or DTLS, is used in the communication protocol level in the security unit.

4. IOT device (IOT) according to one of the preceding claims, wherein a placeholder which is set as replacement key in the communication protocol for the secured interchange of data can be replaced by the provided original key in the security unit.

5. IOT device (IOT) according to one of the preceding claims, wherein the security unit provides the following functionalities:
- locally issuing a client-signed JWT using a locally stored cryptographic key,
- issuing a protected request message for requesting a new access token by means of a refresh token stored on the security unit (SE),
- providing a replacement JWT, with the result that the replacement JWT can be used in an application instead of the original JWT token,
with the result that there is a bijective assignment table of original data to corresponding replacement data, which each form an original JWT (O1, O2, O3, O4) and/or replacement JWT (T1, T2, T3, T4) and/or are used to form them.

6. Method for executing one or more applications (A1, A2, A3) for the secured interchange of data between an IoT device (IOT) and one or more servers which provide web services, wherein the following steps are carried out:
- transmitting (21, 31) a message for the interchange of data by an application which is being executed, wherein the message is modified by mapping original data which form an original key (O1, O2, O3, O4) or are used to form the latter to corresponding replacement data which form a replacement key (T1, T2, T3, T4) and/or are used to form the latter,
- detecting (22, 33) the replacement key that is supplied by the application which is being executed, and that corresponds to the original key, and
- providing a requested original key, corresponding to the replacement key, by demapping (25, 33) the aforementioned mapping, in order to use the original key for the secured interchange of data, initiated by means of the aforementioned message, with the server (26, 36).

7. Method according to the preceding claim, **characterized in that** the transport layer security encryption, abbreviated to TLS or DTLS, is used in the communication protocol level.

8. Method according to one of the preceding method claims, **characterized in that** a placeholder which is set as replacement key in the communication protocol for the secured interchange of data is replaced by the provided original key.

9. Method according to one of the preceding method claims, **characterized in that** an authentication code and/or an authentication checksum are/is inserted into the aforementioned message.

10. Computer program product having at least one computer program which has means for performing the method according to one of the above method claims when the at least one computer program is executed in the IoT device according to one of the above device claims.

## Revendications

1. Appareil IoT (IOT) comprenant une ou plusieurs applications (A1, A2, A3) constitué pour l'échange de données avec un ou plusieurs serveurs mettant à disposition des services web et comprenant une unité (SE) de sécurité constituée par :
- des moyens (R, SE) de reproduction de données originales en des données de remplacement correspondantes et inversement, dans lequel les données originales forment une clé (01, O2, O3, O4) originale et les données de remplacement une clé (T1, T2, T3, T4) de remplacement,
- des moyens de détection d'une clé de remplacement, fournie par une application (A1) mise en réalisation et correspondant à une clé originale, et
- des moyens (SE, R) de mise à disposition d'une clé originale demandée correspondant à la clé de remplacement, à l'aide des moyens mentionnés de reproduction, afin d'utiliser la clé originale pour l'échange de données sécurisé avec le serveur,
et comprenant au moins une unité (R) de réalisation, qui est constituée pour réaliser la une ou les plusieurs applications, dans lequel,
- la une ou les plusieurs applications sont utilisées pour la réalisation d'une telle clé de remplacement, et
- la clé de remplacement est remplacée, au moyen de l'unité de sécurité, par la clé originale demandée et mise à disposition par l'unité de sécurité.

2. Appareil IoT (IOT) suivant la revendication 1, dans lequel l'unité de sécurité a des moyens (R) d'acheminement transparents de la clé originale dans le plan de protocole de communication pouvant être utilisé pour l'échange de données sécurisé.

3. Appareil IoT (IOT) suivant la revendication 1 ou 2, dans lequel il est utilisé, dans l'unité de sécurité dans le plan de protocole de communication, le chiffrage de sécurité à couche de transport, en abrégé TLS ou DTLS.

4. Appareil IoT (IOT) suivant l'une des revendications précédentes, dans lequel, dans l'unité de sécurité, un emplacement mis comme clé de remplacement, peut être remplacé dans le protocole de communication pour l'échange de données sécurisé par la clé originale mise à disposition.

5. Appareil IoT (IOT) suivant l'une des revendications précédentes, dans lequel l'unité de sécurité procure les fonctionnalités suivantes :
- établissement local d'un client signé JWT en utilisant une clé cryptographique mise en mémoire localement,
- établissement d'un message de demande protégée pour la demande d'un nouveau jeton d'accès, au moyen d'un jeton refresh mis en mémoire sur l'unité (SE) de sécurité,
- mise à disposition d'un JWT de remplacement, de manière à pouvoir utiliser dans une application, le JWT de remplacement au lieu du jeton JWT original,
de manière à avoir une table d'association bijective de données originales à des données de remplacements correspondantes, qui forment respectivement un JWT (01, O2, O3, O4) original et/ou un JWT (T1, T2, T3, T4) de remplacement et/ou qui sont utilisés pour sa formation.

6. Procédé de réalisation d'une ou de plusieurs applications (A1, A2, A3) pour l'échange de données sécurisé entre un appareil IoT (IOT) et un ou plusieurs serveurs mettant à disposition des services web, dans lequel on effectue les stades suivants :
- on transmet (21, 31) un message pour l'échange de données par une application mise en réalisation, dans lequel on modifie le message par reproduction de données originales, qui forment une clé (01, O2, O3, O4) originale ou qui sont utilisées pour sa formation, en des données de remplacement correspondantes, qui forment une clé (T1, T2, T3, T4) de remplacement et/ou qui sont utilisées pour sa formation,
- on détecte (22, 23) la clé de remplacement fournie par l'application mise en réalisation et correspondant à la clé originale, et
- on met à disposition une clé originale demandée correspondant à la clé de remplacement, à l'aide d'une reproduction (25, 33) en retour de ladite reproduction, afin d'utiliser la clé originale pour l'échange de données sécurisé et initié par ledit message avec le serveur (26, 36).

7. Procédé suivant la revendication précédente, **caractérisé en ce que** l'on utilise, dans le plan de protocole de communication, le chiffrement de sécurité de couche de transport, en abrégé TLS ou DTLS.

8. Procédé suivant l'une des revendications précédentes de procédé, **caractérisé en ce que** l'on remplace un emplacement mis comme clé de remplacement dans le protocole de communication pour l'échange de données sécurisé par la clé originale mise à disposition.

9. Procédé suivant l'une des revendications précédentes de procédé, **caractérisé en ce que** l'on insère, dans ledit message, un code d'authentification et/ou une somme de contrôle.

10. Produit de programme d'ordinateur comprenant au moins un programme d'ordinateur, qui a un moyen pour effectuer le procédé suivant l'une des revendications précédentes de procédé, lorsque le au moins un programme d'ordinateur est mis en réalisation dans l'appareil IoT suivant l'une des revendications précédentes d'appareil.
